# EUROPÄISCHE PATENTSCHRIFT

(11) **EP 0 850 163 B1**
(45) Veröffentlichungstag und Bekanntmachung des Hinweises auf die Patenterteilung: **24.10.2001**
(21) Anmeldenummer: 97923799.7
(22) Anmeldetag: 10.05.1997
(51) Int. Cl.: B60S 1/38

(54) **SCHEIBENWISCHBLATT**
WINDSHIELD WIPER BLADE
BALAI D'ESSUIE-GLACE

(30) Priorität: 29.07.1996 DE 19630510
(43) Veröffentlichungstag der Anmeldung: 01.07.1998
(73) Patentinhaber: ROBERT BOSCH GMBH, 70442 Stuttgart (DE)
(72) Erfinder: WOLLENSCHLAEGER, Dieter, D-77830 Bühlertal (DE)
(86) Internationale Anmeldenummer: DE9700948
(87) Internationale Veröffentlichungsnummer: WO9804443

(56) Entgegenhaltungen:
- EP-A- 0 455 480
- EP-A- 0 528 643
- US-A- 3 874 020
- US-A- 4 127 916
- US-A- 4 360 943
- US-A- 5 052 072

## Beschreibung

### Stand der Technik

Die Erfindung geht aus von einem Wischblatt nach der Gattung des Anspruchs 1. Bei einem bekannten Wischblatt dieser Art (US-PS 41 27 916, Figuren 21 bis 23) ist die von der Kopfleiste der Wischleiste umschlossene Federschiene gleich lang wie die Wischleiste selbst. Es sind deshalb besondere Ausgestaltungen des Tragelements und/oder der von Krallen des Tragelements gefassten Kopfleiste erforderlich, damit die Wischleiste in ihrer Längsrichtung am Tragelement gesichert ist. Dazu ist dort aber nichts offenbahrt. Auch die Federschiene ist dort in der Kopfleiste der Wischleiste eingebettet, d. h. sie ist bei deren Herstellung direkt miteingeformt worden. Es muß deshalb schon bei der Herstellung der Wischleiste berücksichtigt werden, für welche Windschutzscheibe das Wischblatt verwendet werden soll, damit die Federschiene ihre Hauptaufgabe - möglichst gleichmäßige Verteilung des Anpressdrucks über die gesamte Länge der Wischleiste - erfüllen kann. Die Wahl der Federschiene richtet sich nach einer Vielzahl von Kriterien, zu denen beispielsweise die Art der sphärischen Krümmung der zu wischenden Scheibe und die Neigung der Scheibe bzgl. des Fahrtwindes gehören. Daraus resultiert eine große, unwirtschaftliche Vorratshaltung an Scheibenwischblättern, wenn Kundenwünsche auch kurzfristig befriedigt werden sollen.

### Vorteile der Erfindung

Bei dem erfindungsgemäßen Wischblatt mit den kennzeichnenden Merkmalen des Anspruchs 1 ist es möglich, eine den Kundenwünschen angepaßte Federschiene in den Längskanal der vorgefertigten Wischleiste einzubringen. Dadurch wird die Lagerhaltung vereinfacht. Weiter wird auf einfache Weise eine Sicherung der mit der Federschiene versehenen Wischleiste am Tragelement erreicht.

Zur Längsverschiebesicherung der Federschiene im Längskanal der Wischleiste ist der Querschnitt der Federschiene zumindest partiell größer als der Querschnitt des vorgefertigten Längskanals.

Eine einfache Art der gleichmäßigen Verteilung des Anpreßdrucks über die gesamte Wischblattlänge kann erreicht werden, wenn sich der Querschnitt der Federschiene von einem Mittelabschnitt ausgehend zu den Enden hin verjüngt.

Dabei kann es zweckdienlich sein, die Verjüngung des Federschienenquerschnitts gleichmäßig vorzusehen.

Eine besonders einfache Ausbildung der Halterung zwischen dem Tragelement und der Wischleiste ist erreicht, wenn der eine Endabschnitt des Tragelements mit einem zur Scheibe gerichteten, die Mündung des Längskanals übergreifenden Ansatz versehen ist, an welchem mit dem als Haltemittel ausgebildeten einen Ende der Federschiene zusammen arbeitende Gegenhaltemittel angeordnet sind.

Gemäß einer Ausgestaltung der Erfindung zur Bildung montagefreundlicher Gegenhaltemittel sind diese durch einen Durchbruch gebildet, welcher von dem einen Ende der Federschiene durchdrungen ist.

Um auf eine besonders einfache Art dem Endverbraucher des Wischblatts ein Austausch der verbrauchten Wischleiste zu ermöglichen, weist der andere Endabschnitt des Tragelements eine zur Scheibe gerichtete Durchbrechung auf, der eine entsprechende Durchbrechung in dem anderen Ende der Federschiene zumindest näherungsweise gegenüberliegt und wenn die beiden Durchbrechungen durch Sicherungsmittel in Bezug aufeinander fixiert sind. Nach Lösen der Sicherungsmittel kann die Wischleiste samt Federschiene entfernt und durch einen sog. "Refill-Set" -der aus Wischleiste mit montierter Federschiene besteht- ersetzt werden.

Zweckmäßig und kostengünstig sind die Sicherungsmittel durch eine im Querschnitt im wesentlichen U-förmige, aus einem elastischen Material bestehende Spannklammer gebildet, deren beiden U-Schenkel an den einander zugewandten Seiten ihrer freien Enden als Sicherungsmittel einen Rastnocken bzw. einen Rastzahn aufweisen, welcher mit den als Gegenrastmittel dienenden Durchbrechungen in dem Tragelement und in der Federschiene unter Vorspannung zusammenwirken. Um eine Verformung der Wischleiste in Wischrichtung während des Wischbetriebs zu verhindern, sind an dem Tragelement Stabilisierungsmittel angeordnet, welche mit Stützwangen zumindest Teilbereiche der Längsseiten der Kopfleiste überdecken.

Diese Stabilisierungsmittel können bei ihrer Anordnung im Mittelabschnitt des Tragelements zur Vereinfachung der Montage mit Anschlußmitteln für den angetriebenen Wischerarm versehen sein.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

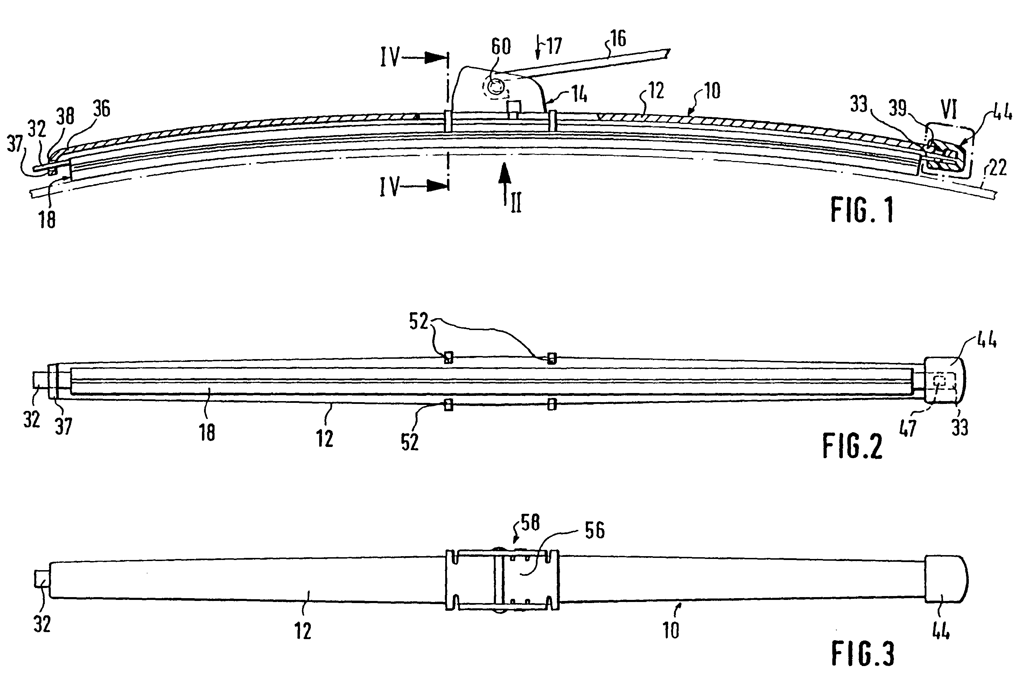

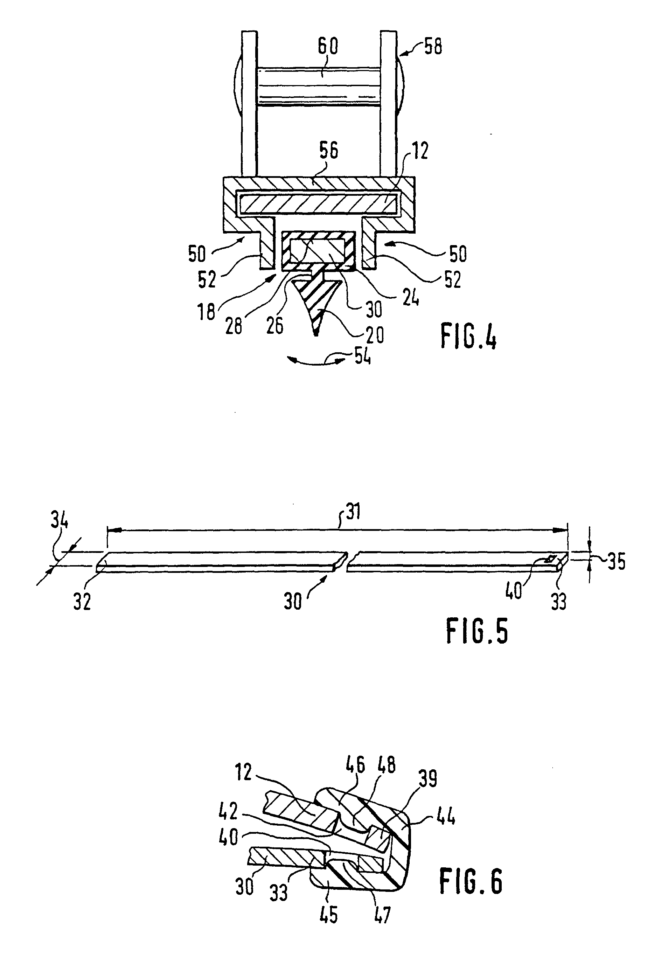

In der Zeichnung zeigen Figur 1 eine Seitenansicht eines Wischblatts, dessen Tragelement abschnittsweise im Längsschnitt gezeigt ist, Figur 2 eine Ansicht des Wischblatts in Richtung des Pfeiles II in Figur 1, Figur 3 eine Draufsicht auf das Wischblatt gemäß Figur 1, Figur 4 einen Querschnitt durch das Wischblatt gemäß Figur 1, entlang der Linie IV-IV in Figur 1, Figur 5 eine unmaßstäbliche, perspektivische Prinzipdarstellung einer zur Wischleiste gehörenden Federschiene und Figur 6 eine vergrößert dargestellte, in Figur 1 mit VI bezeichneten Einzelheit.

### Beschreibung des Ausführungsbeispiels

Ein in Figur 1 gezeigtes Wischblatt 10 hat ein einziges, bügelartiges Tragelement 12, das langestreckt ausgebildet und aus einem elastischen Material gefertigt ist. Das Tragelement 12 ist in seinem Mittelabschnitt mit Anschlußmitteln 14 versehen, an welchen in an sich bekannter Weise ein angetriebener Wischerarm 16 angreift. Der Wischerarm 16 ist in Richtung eines Pfeiles 17 belastet, so daß eine von dem Tragelement 12 gehaltene Wischleiste 18 mit einer Wischlippenleiste 20 an der äußeren Oberfläche einer zu wischenden Scheibe 22 eines Kraftfahrzeuges angelegt ist. Die Wischleiste 18 hat eine Kopfleiste 24 (Figur 4), an deren der zu wischenden Scheibe 22 zugewandten Seite über einen langestreckten Steg 26 die Wischlippenleiste 20 verbunden ist. Die Kopfleiste 24 der aus einem gummiartigen Material gefertigten Wischleiste 18 ist von einem Längskanal 28 durchdrungen, in dem eine ebenfalls langgestreckte Federschiene 30 angeordnet ist. Die Federschiene 30 sorgt auch für eine Stabilisierung der Wischleiste 18 quer zu deren Längserstreckung. Die Hauptaufgabe der Federschiene 30 ist jedoch eine möglichst gleichmäßige Verteilung des Auflagedruckes der Wischlippenleiste 20 auf der Scheibe 22. Die Länge 31 (Figur 5) der Federschiene 30 ist so bemessen, daß ihre beiden Enden 32,33 aus den beiden Mündungen des in der Kopfleiste 24 verhandenen Längskanals 28 ragen. Damit die Federschiene 30 gegen Längsverschiebung im Längskanal 28 gesichert ist, ist deren Querschnitt zumindest partiell größer als der Querschnitt des vorgefertigten Längskanals 28 in der Kopfleiste 24. Damit der Auflagedruck (Pfeil 17, Figur 1) möglichst gleichmäßig über die gesamte Längserstreckung der Wischleiste 18 verteilt wird, verjüngt sich der Querschnitt der Federschiene 30 von ihrem Mittelabschnitt ausgehend zu den Enden 32 und 33. Diese Verjüngung, welche aus der Zeichnung (Figur 5) wegen der in der Praxis schwer erkennbaren geringen Differenz nicht erkennbar ist, kann stufenweise oder auch koninuierlich erfolgen. Die Querschnittsverjüngung kann dadurch erreicht werden, daß sich die Federnschienenbreite 34 verjüngt und/oder durch eine Verringerung der Dicke 35 der Federschiene 30.

Wie Figur 1 zeigt, ist der eine Endabschnitt 36 des Tragelements 12 mit einem zur Scheibe 22 gerichteten, die Mündung des Längskanals 28 übergreifenden Ansatz 37 versehen, der in Verlängerung des Längskanals 28 einen Durchbruch 38 hat, durch welchen das eine Ende 32 der Federschiene 30 hindurchgreift. Das andere Ende 33 der Federschiene 30 weist eine Durchbrechung 40 auf, der eine Durchbrechung 42 im anderen Ende 39 des Tragelements 12 gegenüberliegt. Die beiden Durchbrechungen 40 und 42 sind im wesentlichen zur Scheibe 22 gerichtet. Zur Sicherung der Federschiene 30 gegenüber dem Tragelement 12 ist eine Spannklammer 44 vorgesehen, die einen etwa U-förmigen Querschnitt aufweist. Die beiden U-Schenkel 45 und 46 der aus einem elastischen Material bestehenden Spannklammer 44 (Figur 6) sind an ihren einander zugewandten Seiten im Bereich ihrer freien Enden mit einem Rastzahn 47 bzw. mit eienem Rastnocken 48 versehen. Der Rastnocken 48 ist der Durchbrechung 42 im Ende 39 des Tragelements 12 zugeordnet. Der Rastzahn 47 ist auf Durchbrechung 40 im Ende 33 der Federschiene 30 abgestimmt. Die Spannklammer 44 ist so ausgelegt, daß sie unter elastischer Auslenkung ihrer beiden U-Schenkel 45,46 so montiert werden kann, wie dies in Figur 6 dargestellt ist. Dabei gelangen der Rastzahn 47 in den Durchbruch 40 der Federschiene 30 und der Rastnocken 48 in den Durchbruch 42 im Endabschnitt 39 des Tragelements 12. Die Spannklammer 44 bildet also zusammen mit dem Endabschnitt 39 des Tragelements 12 und dem Ende 33 der Federschiene 30 Haltemittel zum Sichern der Wischleiste 18 an dem Tragelement 12. Auch der eine Endabschnitt 36 des Tragelements 12, mit dem mit dem Durchbruch 38 versehenen Ansatz 37, bildet im Zusammenwirken mit dem durch den Durchbruch 38 hindurchgreifenden Ende 32 der Federschiene 30 ein Mittel zum Halten und Sichern der Wischleiste 18 an dem Tragelement 12. Die Wischleiste 18 ist also zwischen den beiden Halte- bzw. Sicherungsmitteln 32, 36, 37, 38 bzw. 33, 39, 44 frei aufgehängt, so daß sie sich unter dem Auflagedruck (Pfeil 17) optimal an die Krümmung der Scheibe 22 anzupassen vermag. Der in der Durchbrechung 40 liegende Rastzahn 47 sowie der in der Durchbrechung 42 sitzende Rastnocken 48 bilden Sicherungsmittel gegen unbeabsichtigtes Lösen der Spannklammer 44 aus ihrer in Figur 4 dargestellten Betriebsposition, weil deren U-Schenkel 45 und 46 aufeinanderzu vorgespannt am Tragelement 12 und an der Federschiene 30 anliegen und die beiden Bauteile miteinander fixieren.

An dem Tragelement 12 sind weiter Stabilisierungsmittel 50 (Figur 4) angeordnet, welche für eine weiter verbesserte Stabilisierung der Wischleiste 18 quer zu deren Längserstreckung in Richtung der Arbeitsbewegung des Wischblatts sorgen. Diese Stabilisierungsmittel 50, welche im Längs-Mittelbereich des Wischblatts 10 angeordnet sind, umschließen das Tragelement 12 krallenartig (Figur 4) und weisen beidseitig der Kopfleiste 24 zur Scheibe gerichtete Stützwangen 52 auf, welche Teilbereiche der Längsseiten der Kopfleiste 24 überdecken. In Arbeitsrichtung (Doppelpfeil 54 in Figur 4 gesehen) wird also eine mögliche Durchbiegung der Wischleiste 18 durch die Stützwangen 52 begrenzt bzw. verhindert. An einer auf der von der Scheibe 22 abgewandten Seite des Tragelements 12 verlaufenden Basisplatte 56 der Stabilisierungsmittel 50 sind an sich bekannte Anschlußmittel 58 für ein hakenförmiges Ende des Wischerarms 16 angebracht. Diese Anschlußmittel 58 sind beim Ausführungsbeispiel durch zwei zueinander parallelen Wände 60 gebildet, welche mit Abstand voneinander angeordnet und durch einen Anschlußbolzen 60 miteinander verbunden sind. An dem Anschlußbolzen 60 greift das hakenförmige Ende des Wischerarms 16 an.

Durch ein spezielle Auslegung des aus einem elastischen Material bestehenden Tragelements 12 hinsichtlich dessen Querschnitts und hinsichtlich der Materialauswahl kann in Verbindung mit einer zielgerichteten Abstimmung der aus einem elastischen Material bestehenden Federschiene 30 und gegebenenfalls einer entsprechenden Vorspannung der Federschiene gegen die Scheibe 22 eine besonders gute und gleichmäßige Verteilung der Auflagekraft erreicht werden.

Die Anordnung der Spannklammer 44 als lösbares Sicherungselement gestattet ein problemloses Austauschen der Wischleiste 18 samt integrierter Federschiene für den Endverbraucher, weil nach Abnahme der Spannklammer 44 das aus Wischleiste 18 und Federschienen 30 bestehende "Refill-Set" leicht entfernt werden kann. Es braucht dazu lediglich das Ende 32 der Federschiene 30 aus dem Durchbruch 38 des Ansatzes 37 herausgezogen zu werden. Die Montage eines neuen Refill-Sets geschieht in umgekehrter Weise.

## Patentansprüche

1. Scheibenwischblatt (10) mit einem langgestreckten, elastischen Tragelement (12) mit Mitteln (14) zum Anschließen eines angetriebenen Wischerarms (16), mit einer aus einem gummiartigen Material gefertigten, eine Kopfleiste (24) und eine Wischlippenleiste (20) aufweisenden, am Tragelement gehaltenen, langgestreckten und an der zu wischenden Scheibe (22) anlegbaren Wischleiste (18) und mit einer von der Kopfleiste umschlossenen, langgestreckten Federschiene (30), wobei die Federschiene (30) in einem vorgefertigten, die Kopfleiste über deren gesamten Länge durchdringenden Längskanal (28) angeordnet, insbesondere eingesetzt ist, **dadurch gekennzeichnet, daß** die Federschiene (30) mit ihren beiden Enden (32,33) aus der Kopfleiste (24) ragt und daß diese beiden Enden (32,33) der Federschiene (30) Haltemittel zum Sichern der Wischleiste (18) an dem Tragelement (12) bilden.

2. Scheibenwischblatt nach Anspruch 1, **dadurch gekennzeichnet, daß** der Querschnitt der Federschiene (30) zumindest partiell größer ist als der Querschnitt des vorgefertigten Längskanals (28) in der Kopfleiste (24).

3. Scheibenwischblatt nach Anspruch 2, **dadurch gekennzeichnet, daß** sich der Querschnitt der Federschiene (30) von einem Mittelabschnitt ausgehend zu den Enden (32,33) hin verjüngt.

4. Scheibenwischblatt nach Anspruch 3, **dadurch gekennzeichnet, daß** die Verjüngung des Federschienenquerschnitts gleichmäßig erfolgt.

5. Scheibenwischblatt nach einem der Ansprüche 1 bis 4, **dadurch gekennzeichnet, daß** der eine Endabschnitt (36) des Tragelements (12) mit einem zur Scheibe (22) gerichteten, die Mündung des Längskanals (28) übergreifenden Ansatz (37) versehen ist, an welchem mit dem als Haltemittel ausgebildeten einen Ende (32) der Federschiene (30) zusammenarbeitende Gegenhaltemittel (38) angeordnet sind.

6. Scheibenwischblatt nach Anspruch 5, **dadurch gekennzeichnet, daß** die Gegenhaltemittel durch einen Durchbruch (38) gebildet sind, welcher von dem einen Ende (32) der Federschiene (30) durchdrungen ist.

7. Scheibenwischblatt nach einem der Ansprüche 1 bis 6, **dadurch gekennzeichnet, daß** der andere Endabschnitt (39) des Tragelements (12) eine zur Federschiene (30) gerichtete Durchbrechung (42) aufweist, der eine entsprechende Durchbrechung (40) in dem benachbarten Ende (33) der Federschiene (30) zumindest näherungsweise gegenüberliegt und daß die beiden Durchbrechungen (40 bzw. 42) durch den Eingriff von Sicherungsmittel (44) in Bezug aufeiander fixiert sind.

8. Scheibenwischblatt nach Anspruch 7, **dadurch gekennzeichnet, daß** die Sicherungsmittel durch eine im Querschnitt im wesentlichen U-förmige, aus einem elastischen Material bestehende Spannklammer (44) gebildet sind, deren beide U-Schenkel (45,46) an den einander zugewandten Seiten ihrer freien Enden als Sicherungsmittel einen Rastnocken (48) bzw. einen Rastzahn (47) aufweisen, welche mit den als Gegenrastmittel dienenden Durchbrechungen (40 bzw. 42) in dem Tragelement (12) und in der Federschiene (30) unter Vorspannung rastend zusammenwirken.

9. Scheibenwischblatt nach einem der Ansprüche 1 bis 8, **dadurch gekennzeichnet, daß** an dem Tragelement (12) Stabilisierungsmittel (50) angeordnet sind, welche mit Stützwangen (52) zumindest Teilbereiche der Längsseiten der Kopfleiste (24) überdecken.

10. Scheibenwischblatt nach Anspruch 9, **dadurch gekennzeichnet, daß** ein im Mittelabschnitt des Tragelements (12) angeordnetes Stabilisierungsmittel (50) mit Anschlußmitteln (58) für den angetriebenen Wischerarm (16) versehen ist.

## Claims

1. Wiper blade (10) having an elongated, elastic supporting element (12) with means (14) for connection of a driven wiper arm (16), having an elongated wiper strip (18) which is manufactured from a rubber-like material, has a head strip (24) and a wiper-lip strip (20), is held on the supporting element and can be placed against the window/lens glass (22) to be wiped, and having an elongated spring rail (30) which is enclosed by the head strip, the spring rail (30) being arranged, in particular inserted, in a premanufactured longitudinal channel (28) penetrating the head strip over its entire length, **characterized in that** the spring rail (30) protrudes by its two ends (32, 33) out of the head strip (24), and **in that** these two ends (32, 33) of the spring rail (30) form holding means for securing the wiper strip (18) to the supporting element (12).

2. Wiper blade according to Claim 1, **characterized in that** the cross section of the spring rail (30) is at least partially larger than the cross section of the premanufactured longitudinal channel (28) in the head strip (24).

3. Wiper blade according to Claim 2, **characterized in that** the cross section of the spring rail (30) tapers from a central section towards the ends (32, 33).

4. Wiper blade according to Claim 3, **characterized in that** the spring-rail cross section tapers uniformly.

5. Wiper blade according to one of Claims 1 to 4, **characterized in that** the one end section (36) of the supporting element (12) is provided with a projection (37) which is directed towards the window/lens glass (22), overlaps the mouth of the longitudinal channel (28) and on which are arranged mating holding means (38) which are coupled to the one end (32) of the spring rail (30), which end is in the form of holding means.

6. Wiper blade according to Claim 5, **characterized in that** the mating holding means are formed by an opening (38) which is penetrated by the one end (32) of the spring rail (30).

7. Wiper blade according to one of Claims 1 to 6, **characterized in that** the other end section (39) of the supporting element (12) has an aperture (42) which faces the spring rail (30) and lies at least approximately opposite a corresponding aperture (40) in the adjacent end (33) of the spring rail (30), and **in that** the two apertures (40 and 42) are fixed with respect to each other by the engagement of securing means (44).

8. Wiper blade according to Claim 7, **characterized in that** the securing means are formed by a clamping clip (44) which is essentially U-shaped in cross section, consists of an elastic material and whose two U-limbs (45, 46) have as securing means on the mutually facing sides of their free ends a latching boss (48) and a latching tooth (47) which interact in a prestressed latching manner with the apertures (40 and 42, respectively), used as mating latching means, in the supporting element (12) and in the spring rail (30).

9. Wiper blade according to one of Claims 1 to 8, **characterized in that** stabilizing means (50) are arranged on the supporting element (12), the said stabilizing means covering, with supporting cheeks (52), at least subregions of the longitudinal sides of the head strip (24).

10. Wiper blade according to Claim 9, **characterized in that** a stabilizing means (50) which is arranged in the central section of the supporting element (12) is provided with connecting means (58) for the driven wiper arm (16).

## Revendications

1. Balai d'essuie-glace (10) comprenant :
- un élément porteur (12) allongé et élastique,
- des moyens (14) de raccordement à un bras d'essuie-glace (16) entraîné,
- une lame d'essuyage (18), faite d'un matériau du genre caoutchouc, comportant une baguette de tête (24) et une baguette à lèvre d'essuyage (20), et montée sur l'élément porteur, allongée et pouvant s'appliquer sur la vitre (22) à essuyer,
- un rail élastique (30) allongé, entouré par la baguette de tête, ce rail (30) étant monté en particulier inséré dans un canal longitudinal (28) préfabriqué traversant la baguette de tête sur toute sa longueur,
**caractérisé en ce que**
le rail élastique (30), par ses deux extrémités (32, 33) dépasse la baguette de tête (24), et ces deux extrémités (32, 33) constituent des moyens de maintien assurant la position de la lame d'essuyage (18) sur l'élément porteur (12).

2. Balai d'essuie-glace selon la revendication 1,
**caractérisé en ce que**
la section du rail élastique (30) est, au moins en certaines parties, supérieure à la section du canal longitudinal (28) préfabriqué qui traverse la baguette de tête (24).

3. Balai d'essuie-glace selon la revendication 2,
**caractérisé en ce que**
la section du rail élastique (30) décroît de la partie centrale vers les extrémités (32, 33).

4. Balai d'essuie-glace selon la revendication 3,
**caractérisé en ce que**
la réduction de la section du rail élastique est uniforme.

5. Balai d'essuie-glace selon l'une quelconque des revendications 1 à 4,
**caractérisé en ce qu'**
une extrémité (36) de l'élément porteur (12) est munie d'un appendice (37) dirigé vers la vitre (22) et en prise pardessus avec l'embouchure du canal longitudinal (28), et sur cet appendice sont montés des moyens de maintien (38) formant contrepartie à une extrémité (32) du rail (30) constituée en moyen de maintien.

6. Balai d'essuie-glace selon la revendication 5,
**caractérisé en ce que**
les moyens de maintien en contrepartie sont constitués par une ouverture (38) à travers une extrémité (32) du rail élastique (30).

7. Balai d'essuie-glace selon l'une quelconque des revendications 1 à 6,
**caractérisé en ce que**
l'autre extrémité (39) de l'élément porteur (12) présente une ouverture (42) dirigée vers le rail élastique (30) et à laquelle fait face, au moins à peu près, une ouverture (40) correspondante de l'extrémité voisine (33) du rail (30), ces deux ouvertures (40 ou 42) étant fixées l'une par rapport à l'autre par la prise de moyens de sécurisation (44).

8. Balai d'essuie-glace selon la revendication 7,
**caractérisé en ce que**
les moyens de sécurisation sont constitués par une griffe de serrage (44) faite d'un matériau élastique et dont la section a essentiellement la forme d'un U dont les deux branches (45, 46) portent, sur les côtés en regard de leurs extrémités libres, en tant que moyens de sécurisation, respectivement un ergot d'arrêt (48) et une dent d'arrêt (47) qui coopèrent avec les ouvertures (40 ou 42) de l'élément porteur (12) et du rail élastique (30) intervenant comme moyens d'arrêt en contrepartie, pour assurer un blocage sous tension.

9. Balai d'essuie-glace selon l'une quelconque des revendications 1 à 8,
**caractérisé en ce que**
sur l'élément porteur (12) sont montés des moyens de stabilisation (50) qui recouvrent par des joues d'appui (52) au moins des zones partielles des côtés longitudinaux de la baguette de tête (24).

10. Balai d'essuie-glace selon la revendication 9,
**caractérisé en ce qu'**
un moyen de stabilisation (50) monté dans la partie centrale de l'élément porteur (12) est équipé de moyens de raccordement (58) au bras d'essuie-glace (16) entraîné.
